# EUROPEAN PATENT APPLICATION

(11) **EP 2 587 904 A1**
(43) Date of publication of application: **01.05.2013**
(21) Application number: 12189654.2
(22) Date of filing: 24.10.2012
(51) Int. Cl.: H05K 5/02, H04N 5/645, G02F 1/1333

(54) **Display device and television**

(30) Priority: 26.10.2011 JP 2011234766
(71) Applicant: Funai Electric Co., Ltd., Daito-shi Osaka 574-0013 (JP)
(72) Inventor: Yokawa, Akira, Daito-shi, Osaka 574-0013 (JP); Kita, Yuki, Daito-shi, Osaka 574-0013 (JP); Fujikawa, Akihiro, Daito-shi, Osaka 574-0013 (JP); Fukumoto, Yasuyuki, Daito-shi, Osaka 574-0013 (JP); Mori, Yasuhiro, Daito-shi, Osaka 574-0013 (JP); Suzuki, Yuto, Daito-shi, Osaka 574-0013 (JP); Horiuchi, Hirofumi, Daito-shi, Osaka 574-0013 (JP); Tsuji, Hirohiko, Daito-shi, Osaka 574-0013 (JP); Yamanaka, Takahito, 574-0013, Osaka 574-0013 (JP); Yonezawa, Hideo, 574-0013, Osaka 574-0013 (JP)
(74) Representative: Grünecker, Kinkeldey, Stockmair & Schwanhäusser

(57) **Abstract**

A display device that is assembled by sequentially stacking up a display panel from a front side with a front case acting as a base while precisely positioning the display panel with respect to the front case, includes a liquid crystal panel and a front case including an opening that exposes the display region of the liquid crystal panel and X-direction positioning members that position the liquid crystal panel by contacting at least one side of the liquid crystal panel.

## Description

### BACKGROUND OF THE INVENTION

### 1. Field of the Invention

The present invention relates to a display device and a television, and particularly to a display device and a television including a display panel.

### 2. Description of the Related Art

Display devices including a display panel have been known in the past. See, for example, Japanese Patent Application Laid-Open Publication No. 2007-17480.

Japanese Patent Application Laid-Open Publication No. 2007-17480 discloses a liquid crystal display device including a bezel-less liquid crystal substrate (display panel), a shielding frame that presses the edge portion of the bezel-less liquid crystal substrate on the side of the front surface, and a front cabinet body (front case) that has an opening for exposing the display region of the bezel-less liquid crystal substrate. In this liquid crystal display device, a shielding frame carrier that positions the shielding frame is provided on the front cabinet body, and a position restricting means that positions the bezel-less liquid crystal substrate is provided on the shielding frame. Consequently, in the liquid crystal display device of Japanese Patent Application Laid-Open Publication No. 2007-17480, the shielding frame can be stacked up by being positioned with respect to the front cabinet body, and the bezel-less liquid crystal substrate can be stacked up by being positioned with respect to the shielding frame, so assembly is possible by sequentially stacking up the shielding frame and the bezel-less liquid crystal substrate with the front cabinet body as the base.

However, in the liquid crystal display device described in Japanese Patent Application Laid-Open Publication No. 2007-17480, the shielding frame is positioned with respect to the front cabinet body, and the bezel-less liquid crystal substrate is positioned with respect to the shielding frame, so the bezel-less liquid crystal substrate is positioned indirectly with respect to the front cabinet body via the shielding frame. Because of this, there is a problem in that the positioning precision of the bezel-less liquid crystal substrate with respect to the front cabinet body is low.

### SUMMARY OF THE INVENTION

Accordingly, preferred embodiments of the present invention provide a display device and a television which can be assembled by stacking up a display panel sequentially from a front side with a front case as the base while precisely positioning the display panel with respect to the front case.

A display device according to a first preferred embodiment of the present includes a display panel and a front case which includes an opening that exposes the display region of the display panel and a first positioning member that positions the display panel by contacting at least one side of the display panel.

In the display device according to the first preferred embodiment of the present invention, by providing the front case with a first positioning member that positions the display panel by contacting at least one side of the display panel as described above, the display panel can be positioned with respect to the front case by the first positioning member, so it is possible to assemble the display device by sequentially stacking up the display panel from the front side with the front case as the base. Furthermore, because the display panel can be positioned directly with respect to the front case by the first positioning member, it is possible to position the display panel with a high degree of precision with respect to the front case. Accordingly, with this display device, assembly is possible by sequentially stacking up the display panel from the front side with the front case as the base while precisely positioning the display panel with respect to the front case. Moreover, by stacking up the display panel with the front case as the base during assembly, the front side of the display panel can be pressed by the front case, so that the number of bezels to press the front side of the display panel can be reduced.

In the display device according to the first preferred embodiment of the present invention, it is preferable that the first positioning member include a contact surface extending along at least one side of the display panel and be configured so as to position the display panel as a result of the contact surface contacting the side surface of the display panel. If such a configuration is adopted, the contact surface of the first positioning member extends along the side of the display panel in a state in which the contact surface is in surface contact with the side surface of the side of the display panel, so the display panel can be positioned with a higher degree of precision.

In this case, the contact surface of the first positioning member is preferably arranged to protrude rearward from the inner surface of the front case and such that the width in the direction of extension thereof along the side of the display panel is larger than the height of the rearward protrusion. With such a configuration, the side surface of the side of the display panel is contacted by the contact surface of the first positioning member in a wider range in a surface contact state, so the display panel can be positioned in an even higher degree of precision by the contact surface of the first positioning member.

In the display device according to the first preferred embodiment of the present invention, it is preferable that the first positioning member be provided only on one side of the display panel in a first direction and configured so as to contact the one side surface of the display panel in the first direction and position the display panel in a state of leaning against the one side. If such a configuration is adopted, the display panel can be positioned easily by the first positioning member in a state of leaning against the one side without providing any positioning member on the other side of the display panel in the first direction. Consequently, the positioning of the display panel can be performed while simplifying the positioning member.

In this case, it is preferable that the first positioning member be provided only on one side of the display panel in the first direction, that another first positioning member be also provided only on one side of the display panel in a second direction that is perpendicular or substantially perpendicular to the first direction, and that the first positioning members be configured so as to respectively contact the one side surface in the first direction and the one side surface in the second direction of the display panel and thus position the display panel in a state of leaning against the one side with respect to the first direction and the second direction. With such a configuration, the display panel can be positioned easily in a state of leaning against the one side with respect to the two mutually perpendicular or substantially perpendicular directions by the first positioning members without providing any positioning member on the other side in the first direction and on the other side in the second direction of the display panel. Consequently, it is possible to position the display panel with respect to the two mutually perpendicular or substantially perpendicular directions while simplifying the positioning members.

In the configuration in which the display panel is positioned in a state of leaning against the one side with respect to the first direction and the second direction, it is preferable that the first positioning members be configured so as to respectively contact the vicinity of the two end portions of the one side surface of the display panel in the first direction and the vicinity of the two end portions of the one side surface of the display panel in the second direction and thus position the display panel in a state of leaning against the one side with respect to the first direction and the second direction. If such a configuration is adopted, the first positioning members are used to respectively position the vicinity of the two end portions of the one side surface in the first direction and the vicinity of the two end portions of the one side surface in the second direction of the display panel, so the display panel can be positioned more precisely with respect to the two mutually perpendicular or substantially perpendicular directions.

In the display device according to the first preferred embodiment of the present invention, it is preferable that the first positioning member(s) be integral with the front case. With such a configuration, unlike a case of forming the first positioning member(s) separately from the front case, it is possible to prevent an increase in the number of parts.

In the display device according to the first preferred embodiment of the present invention, it is preferable that the display device further includes a bezel which presses the edge portion of the display panel and with which a second positioning member that positions the display panel is integral, that the first positioning member of the front case be provided only on one side of the display panel in a first direction, that the second positioning member of the bezel be provided only on one side of the display panel in a second direction perpendicular or substantially perpendicular to the first direction, and that the display panel be configured so as to be positioned in a state of leaning against the one side with respect to the first direction and the second direction as a result of the one side surface in the first direction and the one side surface in the second direction being respectively contacted by the first positioning member and the second positioning member. If such a configuration is adopted, the display panel can be positioned easily in a state of leaning against the one side with respect to the two mutually perpendicular or substantially perpendicular directions by using the first positioning member of the front case and the second positioning member of the bezel without providing any positioning member on the other side in the first direction and on the other side in the second direction of the display panel.

In this case, it is preferable that the display device further includes a panel support member that preferably is frame-shaped and supports the display panel from the rear, and that the front case be provided with a third positioning member which positions both the panel support member and the bezel with respect to the front case. With such a configuration, because the third positioning member is shared for the positioning of both the panel support member and the bezel, it is not necessary to provide respective positioning members for the panel support member and the bezel separately from each other. This makes it possible to simplify the structure for positioning the panel support member and the bezel.

A television according to a second preferred embodiment of the present invention includes a receiver capable of receiving a television broadcast, a display panel which displays the television broadcast received by the receiver, and a front case which includes an opening that exposes the display region of the display panel and a positioning member that positions the display panel by contacting at least one side of the display panel.

In the television according to the second preferred embodiment of the present invention, by providing the front case with a positioning member that positions the display panel by contacting at least one side of the display panel as described above, the display panel can be positioned with respect to the front case by the positioning member, so assembly is possible by sequentially stacking up the display panel from the front side with the front case as the base. In addition, because the display panel can be positioned directly with respect to the front case by the positioning member, the display panel can be positioned with a high degree of precision with respect to the front case. Accordingly, in this television, assembly is possible by sequentially stacking up the display panel from the front side with the front case as the base while precisely positioning the display panel with respect to the front case. Furthermore, by stacking up the display panel with the front case as the base during assembly, the front side of the display panel can be pressed by the front case, so it is possible to reduce the number of bezels needed to press the front side of the display panel.

With various preferred embodiments of the present invention, assembly is possible by sequentially stacking up the display panel from the front side with the front case as the base while precisely positioning the display panel with respect to the front case.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is an overall perspective view of the liquid crystal television according to a first preferred embodiment of the present invention as seen from the front side.

FIG. 2 is an overall perspective view of the liquid crystal television according to the first preferred embodiment of the present invention as seen from the rear side.

FIG. 3 is an exploded perspective view showing the liquid crystal television according to the first preferred embodiment of the present invention.

FIG. 4 is an enlarged exploded perspective view showing the inner surface side of the front case of the liquid crystal television according to the first preferred embodiment of the present invention.

FIG. 5 is a plan view of the front case of the liquid crystal television according to the first preferred embodiment of the present invention as seen from the inner surface side.

FIG. 6 is a diagram of the liquid crystal television according to the first preferred embodiment of the present invention showing a state in which the liquid crystal panel is positioned.

FIG. 7 is a diagram showing a positioning member of the front case of the liquid crystal television according to the first preferred embodiment of the present invention.

FIG. 8 is an enlarged perspective view showing positioning members of the front case of the liquid crystal television according to the first preferred embodiment of the present invention.

FIG. 9 is a diagram of the liquid crystal television according to the first preferred embodiment of the present invention showing a state in which the hold plate is stacked up.

FIG. 10 is a diagram of the liquid crystal television according to the first preferred embodiment of the present invention showing a state in which the rear frame is stacked up.

FIG. 11 is a sectional view along line 300-300 in FIG. 10.

FIG. 12 is an enlarged exploded perspective view showing the inner surface side of the front case of the liquid crystal television according to a second preferred embodiment of the present invention.

FIG. 13 is a diagram of the liquid crystal television according to the second preferred embodiment of the present invention showing a state in which the liquid crystal panel is positioned.

FIG. 14 is an enlarged perspective view showing a positioning member of the front case and a positioning member of a bezel of the liquid crystal television according to the second preferred embodiment of the present invention.

FIG. 15 is a diagram showing a modified example of the liquid crystal television according to the first preferred embodiment of the present invention.

### DETAILED DESCRIPTION OF THE PREFERRED EMBODIMENTS

Preferred embodiments of the present invention will be described below based on figures.

### First Preferred Embodiment

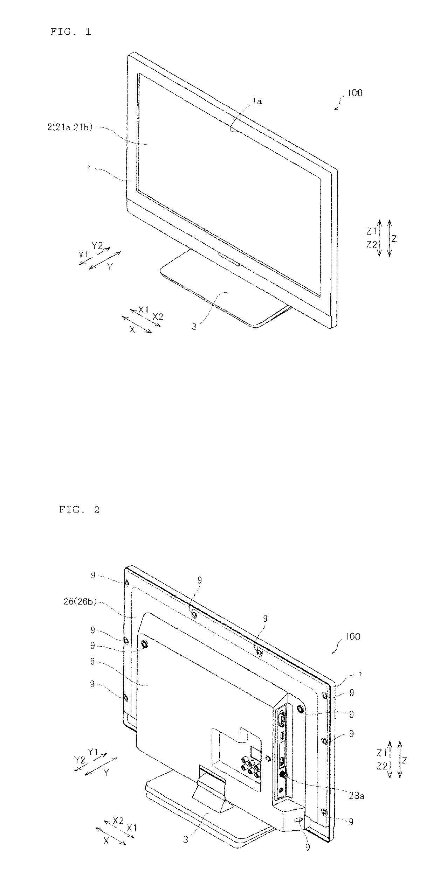

The configuration of the liquid crystal television 100 according to a first preferred embodiment of the present invention will be described with reference to FIGs. 1 through 11. Note that in the first preferred embodiment, a description will be provided of an example in which "display device" and "television" of the present invention are applied to the liquid crystal television 100.

The liquid crystal television 100 according to the first preferred embodiment of the present invention includes a frame-shaped front case 1, a liquid crystal module 2 disposed on the rear side (Y2 direction side) of the front case 1, and a stand member 3 that supports the entire liquid crystal television 100 as shown in FIGs. 1 and 2.

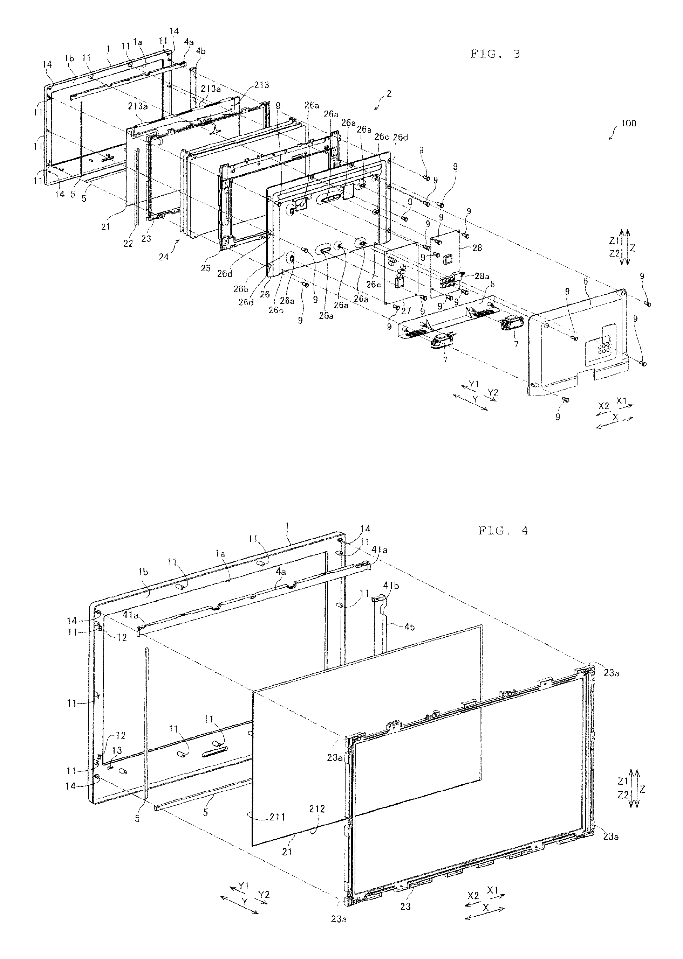

The front case 1 has a substantially rectangular opening 1a for exposing the rectangular display region 21a (see FIG. 1) of the liquid crystal module 2 as shown in FIG. 1. Furthermore, a plurality of screw engagement parts 11 are preferably integral with the front case 1 on the inner surface 1b (the surface on the Y2 direction side) of the front case 1 along the edge portion as shown in FIGs. 3 through 5.

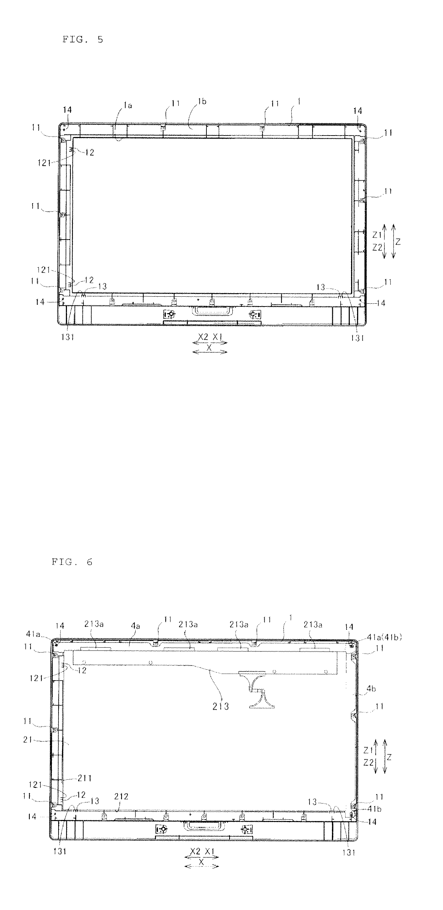

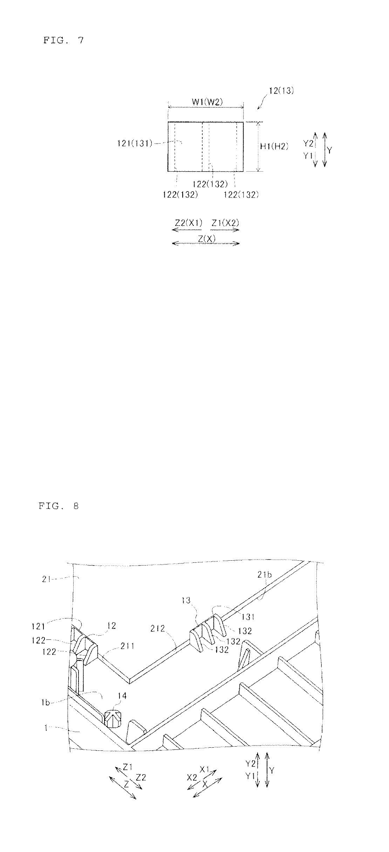

Here, in the first preferred embodiment, as is shown in FIGs. 4 and 5, two X-direction positioning members 12 are provided on the inner surface 1b (the surface on the Y2 direction side) of the front case 1 in the vicinity of the two end portions of one side of the opening 1a oriented in the X2 direction with a space provided between each other. Note that the X direction is one example of a "first direction" of the present invention, and the X-direction positioning members 12 are one example of a "first positioning member" according to a preferred embodiment of the present invention. The two X-direction positioning members 12 are preferably arranged so as to protrude rearward from the inner surface 1b of the front case 1 as shown in FIGs. 4 and 5. Moreover, as is shown in FIGs. 5 through 8, each of the two X-direction positioning members 12 includes a contact surface 121 that contacts the side surface 211 of the rectangular liquid crystal panel 21 (see FIGs. 6 and 8 and description below) oriented in the X2 direction. The contact surface 121 is arranged so as to extend in the Z direction along the one side of the liquid crystal panel 21 oriented in the X2 direction.

To elaborate this, the contact surface 121 protrudes rearward from the inner surface 1b of the front case 1. In addition, as is shown in FIG. 7, the contact surface 121 is arranged such that the width W1 in the direction of extension thereof (Z direction) along the one side of the liquid crystal panel 21 oriented in the X2 direction is larger than the height H1 protruding to the rear (Y2 direction). Furthermore, the contact surface 121 is supported by three reinforcing ribs 122 provided on the back surface side (X2 direction side) of the contact surface 121 as shown in FIGs. 7 and 8. The three reinforcing ribs 122 are disposed so as to be adjacent at a specified distance from each other in the direction of extension of the contact surface 121 (Z direction) along the one side of the liquid crystal panel 21 oriented in the X2 direction.

Moreover, the two X-direction positioning members 12 are configured such that the contact surfaces 121 respectively contact the vicinity of the two end portions of the side surface 211 of the liquid crystal panel 21 oriented in the X2 direction as shown in FIG. 6. The two X-direction positioning members 12 are also configured so as to position the liquid crystal panel 21 in the X direction in a state in which the liquid crystal panel 21 leans against the one side toward the X2 direction as a result of the contact surfaces 121 contacting the side surface 211 of the liquid crystal panel 21 oriented in the X2 direction. In addition, the two X-direction positioning members 12 are preferably integral with the front case 1. Note that no positioning member that positions the liquid crystal panel 21 is provided on the side of the opening 1a of the front case 1 oriented in the X1 direction.

Furthermore, two Z-direction positioning members 13 are located on the inner surface 1b (the surface on the Y2 direction side) of the front case 1 in the vicinity of the two end portions of one side of the opening 1a oriented toward the bottom (oriented in the Z2 direction) being spaced from each other. Note that the Z direction is one example of a "second direction" of a preferred embodiment of the present invention, and the Z-direction positioning members 13 are one example of a "first positioning member" of a preferred embodiment of the present invention. The two Z-direction positioning members 13 are arranged so as to protrude rearward from the inner surface 1b of the front case 1 as shown in FIGs. 3 through 5. Moreover, the two Z-direction positioning members 13 have the same configuration as the aforementioned X-direction positioning members 12.

In concrete terms, as is shown in FIGs. 5 through 8, each of the two Z-direction positioning members 13 has a contact surface 131 that contacts the side surface 212 (see FIGs. 6 and 8) of the rectangular liquid crystal panel 21 (described later) oriented toward the bottom (oriented in the Z2 direction). The contact surface 131 is arranged so as to extend in the X direction along the one side of the liquid crystal panel 21 oriented in the Z2 direction. To elaborate this, the contact surface 131 protrudes rearward from the inner surface 1b of the front case 1. In addition, the contact surface 131 is arranged such that the width W2 in the direction of extension thereof (X direction) along the one side of the liquid crystal panel 21 oriented in the Z2 direction is larger than the height H2 protruding to the rear (Y2 direction) as shown in FIG. 7. Furthermore, the contact surface 131 is supported by three reinforcing ribs 132 provided on the back surface side (Z2 direction side) of the contact surface 131 as shown in FIGs. 5 through 8. The three reinforcing ribs 132 are disposed so as to be adjacent at a specified distance from each other in the direction of extension of the contact surface 131 (X direction) along the one side of the liquid crystal panel 21 oriented in the Z2 direction.

Moreover, the two Z-direction positioning members 13 are configured such that the contact surfaces 131 respectively contact the vicinity of the two end portions of the side surface 212 of the liquid crystal panel 21 oriented toward the bottom (oriented in the Z2 direction) as shown in FIG. 6. The Z-direction positioning members 13 are also configured so as to position the liquid crystal panel 21 in the Z direction in a state in which the liquid crystal panel 21 leans against the one side toward the Z2 direction as a result of the contact surfaces 131 contacting the side surface 212 of the liquid crystal panel 21 oriented toward the bottom (oriented in the Z2 direction). That is, the two X-direction positioning members 12 and the two Z-direction positioning members 13 make it possible to position the liquid crystal panel 21 with respect to the X direction and the Z direction in a state of leaning against the one side. In addition, the two Z-direction positioning members 13 are preferably integral with the front case 1. Note that no positioning member that positions the liquid crystal panel 21 is provided on the side of the opening 1a of the front case 1 oriented toward the top (oriented in the Z1 direction).

Furthermore, four cruciform bosses 14 are provided on the inner surface 1b (the surface on the Y2 direction side) of the front case 1 as shown in FIGs. 3 through 6. Note that the bosses 14 are one example of a "third positioning member" of a preferred embodiment of the present invention. The four bosses 14 are disposed in the vicinity of the corner portions of the substantially rectangular opening 1a. Moreover, the bosses 14 are provided in order to position bezels 4a and 4b (described later) and a resin frame 23 (described later). The bosses 14 are preferably integral with the front case 1. The bosses 14 are also arranged so as to protrude rearward from the inner surface 1b of the front case 1.

The liquid crystal module 2 includes the liquid crystal panel 21, a light source 22, the resin frame 23, optical members 24, a frame-shaped hold plate 25, and a rear frame 26 made of a sheet metal as shown in FIG. 3. In concrete terms, the hold plate 25, the optical members 24, the frame-shaped resin frame 23, and the liquid crystal panel 21 are disposed in this order from the rear frame 26 toward the direction of the front case 1 (arrow Y1 direction). In addition, the light source 22 configured from a plurality of LEDs is disposed on the side surface of the resin frame 23 oriented in the X2 direction. Note that the liquid crystal panel 21 is one example of a "display panel" of a preferred embodiment of the present invention, and the resin frame 23 is one example of a "panel support" of a preferred embodiment of the present invention.

The liquid crystal panel 21 constitutes the liquid crystal display panel and is configured from a liquid crystal panel, an electrode sheet, and the like. Furthermore, the liquid crystal panel 21 is configured so as to be driven in accordance with television broadcast received by a receiver (tuner) 28a (described later) and display the television broadcast. Moreover, the liquid crystal panel 21 preferably has a rectangular or substantially rectangular shape in plan view.

In addition, the liquid crystal panel 21 is configured such that two of the sides on the edge portion on the side of the front surface 21b (Y1 direction side) are respectively pressed by the two bezels 4a and 4b and also such that the other two sides are pressed by cushion members 5 as shown in FIGs. 3 and 4. In concrete terms, as is shown in FIGs. 3, 4, and 6, of the edge portion of the rectangular liquid crystal panel 21, the bezel 4a is provided along the side of the liquid crystal panel 21 oriented toward the top (the side oriented in the Z1 direction) on which a drive circuit 213 (see FIGs. 3 and 6) is provided, while the bezel 4b is provided along the side of the liquid crystal panel 21 oriented in the X1 direction on which another drive circuit (not illustrated) is provided. Furthermore, the cushion members 5 are respectively provided along the side of the liquid crystal panel 21 oriented toward the bottom (the side oriented in the Z2 direction) and the side of the liquid crystal panel 21 oriented in the X2 direction as shown in FIGs. 3 and 4.

The bezels 4a and 4b are preferably made of a sheet metal having a substantially cross-sectional L shape and configured so as to press the front surface of the liquid crystal panel 21 by sandwiching the edge portion of the liquid crystal panel 21 between the bezels and the resin frame 23. Moreover, the two bezels 4a and 4b are arranged so as to respectively extend along the corresponding sides of the liquid crystal panel 21. In addition, holes 41a (41b) into which bosses 14 on the front case 1 are inserted are formed in the vicinity of the two end portions of the bezel 4a (4b) as shown in FIGs. 4 and 6. Consequently, the two bezels 4a and 4b can be positioned with respect to the front case 1 by inserting bosses 14 of the front case 1 into the holes 41a and 41b in the bezels 4a and 4b.

The cushion members 5 include rubber members and preferably are non-conductive elastic members. Furthermore, the cushion members 5 are arranged so as to contact both the inner surface 1b (the surface on the Y2 direction side) of the front case 1 and the front surface 21b of the liquid crystal panel 21. Consequently, chattering noise occurring between the front case 1 and the liquid crystal panel 21 can be reduced. Moreover, the two cushion members 5 are arranged so as to respectively extend along the corresponding sides of the liquid crystal panel 21.

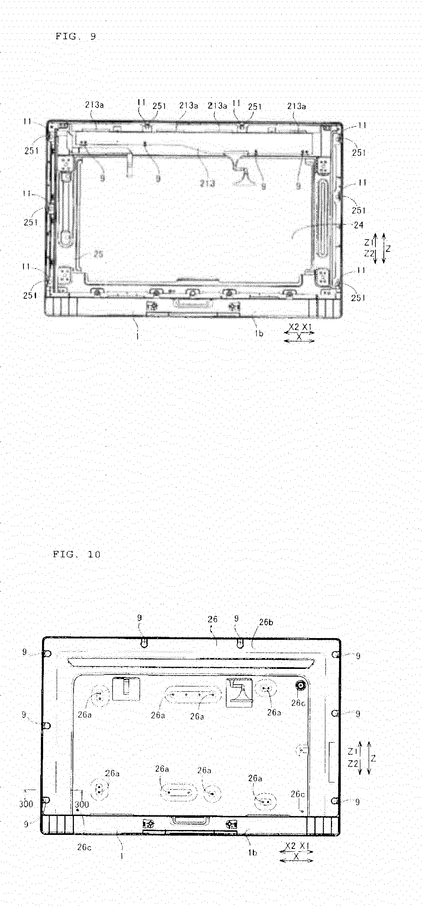

In addition, the drive circuit 213 is connected to the liquid crystal panel 21 by a plurality of flexible cables 213a and disposed on the rear surface of the liquid crystal panel 21 as shown in FIGs. 3 and 6. In concrete terms, as is shown in FIG. 9, the drive circuit 213 is configured so as to be attached by screws 9 to the rear surface (the surface on the Y2 direction side) of the frame-shaped hold plate 25 disposed behind the liquid crystal panel 21 as a result of the flexible cables 213a being bent in the shape of the letter U.

The resin frame 23 preferably has a frame shape and is configured so as to support the edge portion of the liquid crystal panel 21 from the rear side (Y2 direction side) as shown in FIGs. 3 and 4. Furthermore, four circular holes 23a into which the bosses 14 are inserted are preferably formed in the resin frame 23 in positions corresponding to the four bosses 14 of the front case 1 as shown in FIG. 4. Consequently, the resin frame 23 can be positioned with respect to the front case 1 by inserting the four bosses 14 of the front case 1 into the four holes 23a in the resin frame 23. That is, both the two bezels 4a and 4b and the resin frame 23 are positioned with respect to the front case 1 by the four bosses 14.

The optical members 24 preferably include an optical reflective sheet, a light guide plate, a diffusion sheet, a lens sheet, and the like. Moreover, the optical members 24 are held by being sandwiched between the resin frame 23 and the hold plate 25 from the forward-rearward direction (Y direction). A plurality of cutouts 251 are preferably formed in the outer peripheral portion of the hold plate 25 at positions corresponding to the plurality of screw engagement portions 11 of the front case 1.

The rear frame 26 preferably has a substantially rectangular shape in plan view as shown in FIGs. 2 and 3. In addition, as is shown in FIG. 3, the rear frame 26 has a plurality of board attachment screw holes 26a and configured such that a circuit board 27 that supplies power to the entire device and a circuit board 28 to perform signal processing that is provided with the receiver (tuner) 28a capable of receiving television broadcast can be attached to the back surface 26b (the surface on the Y2 direction side) of the rear frame 26. Furthermore, the rear frame 26 includes a plurality of cover attachment screw holes 26c and is configured such that a cover member 6 having a concave shape so as to cover the circuit boards 27 and 28 can be attached as shown in FIGs. 2 and 3. The cover member 6 has a substantially rectangular shape as seen from the rear (Y2 direction side) and is preferably smaller than the rear frame 26. Consequently, the portion on the back surface 26b of the rear frame 26 in the vicinity of the edge portion is exposed as shown in FIG. 2. That is, the rear case of the liquid crystal television 100 preferably including the cover member 6 and the portion of the rear frame 26 in the vicinity of the edge portion that is exposed from the cover member 6.

Moreover, as is shown in FIGs. 2, 3, and 10, a plurality of screw insertion holes 26d into which a plurality of screws 9 can be inserted are provided in the exposed portion of the rear frame 26 in the vicinity of the edge portion. The rear frame 26 is configured so as to be attached to the front case 1 as a result of the screws 9 that are inserted into the screw insertion holes 26d being engaged with the screw engagement parts 11 of the front case 1 as shown in FIG. 3. In addition, two speakers 7 are provided on the side of the back surface 26d of the rear frame 26. The speakers 7 are configured so as to be held by being sandwiched between the rear frame 26 and the cover member 6 via a speaker attachment member 8.

Next, the procedure for assembling the liquid crystal television 100 will be described with reference to FIGs. 3, 4, 6, and 8 through 11. In the first preferred embodiment, the liquid crystal television 100 is assembled preferably by stacking up the respective constituent elements of the liquid crystal module 2 in order from the front side with the front case 1 as the base. A description will be given below in detail.

First, as is shown in FIG. 6, the two bezels 4a and 4b are placed on the inner surface 1b of the front case 1 while positioning the bezels 4a and 4b with respect to the front case 1 by inserting bosses 14 into the holes 41a and 41b, and the two cushion members 5 (see FIGs. 3 and 4) are placed on the inner surface 1b of the front case 1. Afterward, the rectangular liquid crystal panel 21 is stacked thereupon. In this case, positioning is performed in a state of leaning against the one side with respect to the X direction by causing the side surface 211 of the liquid crystal panel 21 oriented in the X2 direction to contact the contact surfaces 121 of the two X-direction positioning members 12 as shown in FIGs. 6 and 8. Furthermore, positioning is performed in a state of leaning against the one side with respect to the Z direction by causing the side surface 212 of the liquid crystal panel 21 oriented in the Z2 direction to contact the contact surfaces 131 of the two Z-direction positioning members 13. That is, the liquid crystal panel 21 is positioned in a state of leaning against the one side with respect to the X direction and the Z direction.

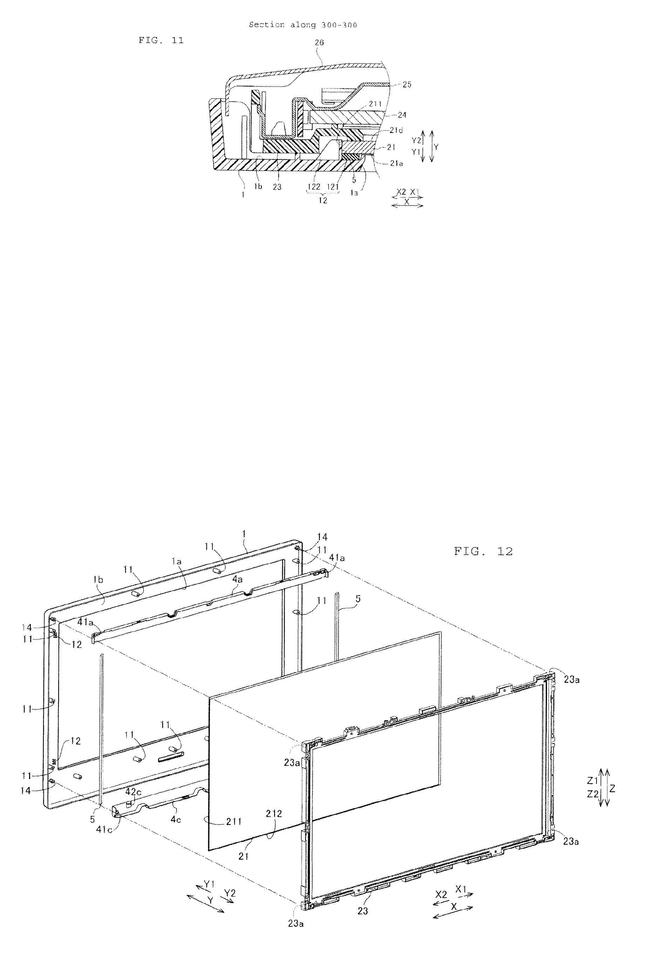

Then, in a state in which the liquid crystal panel 21 is positioned with respect to the front case 1, the resin frame 23 is stacked thereupon while positioning the resin frame 23 with respect to the front case 1 by inserting the bosses 14 that have positioned the bezels 4a and 4b into the holes 23a as shown in FIG. 4. Thereafter, in a state in which the optical members 24 are sandwiched between the resin frame 23 and the hold plate 25, the frame-shaped hold plate 25 is stacked thereupon such that the plurality of cutouts 251 (see FIG. 9) correspond to the plurality of screw engagement parts 11 of the front case 1 as shown in FIGs. 3 and 9. Then, the rear frame 26 is stacked thereupon as shown in FIGs. 10 and 11, and the rear frame 26 is fixed to the front case 1 by screws 9 (see FIG. 10). Thus, in the liquid crystal television 100 of the first preferred embodiment, the respective constituent elements of the liquid crystal module 2 can be assembled in a stacking method sequentially from the front side with the front case 1 as the base as shown in FIG. 11. Afterward, the cover member 6 is attached in a state in which the speakers 7 are sandwiched between the rear frame 26 and the cover member 6, and the stand member 3 is also attached.

In the first preferred embodiment, as was described above, as a result of the front case 1 being provided with the X-direction positioning members 12 (Z-direction positioning members 13) that position the liquid crystal panel 21 by contacting the liquid crystal panel 21, the liquid crystal panel 21 can be positioned with respect to the front case 1 via the X-direction positioning members 12 (Z-direction positioning members 13). Therefore, assembly is possible by sequentially stacking up the liquid crystal panel 21 from the front side with the front case 1 as the base. Moreover, because the liquid crystal panel 21 can be positioned directly with respect to the front case 1 by the X-direction positioning members 12 (Z-direction positioning members 13), it is possible to position the liquid crystal panel 21 with a high degree of precision with respect to the front case 1. Accordingly, in this liquid crystal television 100, assembly is possible by sequentially stacking up the liquid crystal panel 21 from the front side with the front case 1 as the base while precisely positioning the liquid crystal panel 21 with respect to the front case 1. In addition, as a result of the liquid crystal panel 21 being stacked up with the front case 1 as the base during assembly, the front side of the liquid crystal panel 21 can be pressed by the front case 1, so it is possible to reduce the number of the bezels to press the front side of the liquid crystal panel 21.

Furthermore, in the first preferred embodiment, as was described above, the liquid crystal panel 21 is positioned by providing the X-direction positioning members 12 (Z-direction positioning members 13) with the contact surfaces 121 (131) that extend along a side of the liquid crystal panel 21 and by causing the contact surfaces 121 (131) to contact the side surface 211 (212) of the liquid crystal panel 21. Consequently, the contact surfaces 121 (131) of the X-direction positioning members 12 (Z-direction positioning members 13) extend along the side of the liquid crystal panel 21 in a state in which the contact surfaces 121 (131) are in surface contact with the side surface 211 (212) of the liquid crystal panel 21, so the liquid crystal panel 21 can be positioned with a higher degree of precision.

Moreover, in the first preferred embodiment, as was described above, the contact surfaces 121 (131) of the X-direction positioning members 12 (Z-direction positioning members 13) are arranged such that the width W1 (W2) in the direction of extension thereof along a side of the liquid crystal panel 21 is larger than the height H1 (H2) of the rearward protrusion. Consequently, the side surface 211 (212) of the liquid crystal panel 21 contacts the contact surfaces 121 (131) of the X-direction positioning members 12 (Z-direction positioning members 13) in a wider range in a surface contact state, so the liquid crystal panel 21 can be positioned with an even higher degree of precision by the contact surfaces 121 (131) of the X-direction positioning members 12 (Z-direction positioning members 13).

In addition, in the first preferred embodiment, as was described above, the X-direction positioning members 12 are configured so as to position the liquid crystal panel 21 in a state in which the liquid crystal panel 21 leans against the one side by contacting the side surface 211 of the liquid crystal panel 21 oriented in the X2 direction. This makes it possible for the X-direction positioning members 12 to position the liquid crystal panel 21 easily in a state of leaning against the one side without providing any positioning member on the other side (X1 direction side) of the liquid crystal panel 21 in the X direction. Consequently, it is possible to perform the positioning of the liquid crystal panel 21 while simplifying the positioning members.

Furthermore, in the first preferred embodiment, as was described above, the X-direction positioning members 12 and the Z-direction positioning members 13 are configured so as to position the liquid crystal panel 21 in a state of leaning against the one side with respect to the X direction and the Z direction by respectively contacting the side surface 211 in the X2 direction and the side surface 212 in the Z2 direction of the liquid crystal panel 21. Consequently, the liquid crystal panel 21 can be positioned easily in a state of leaning against the one side with respect to the two mutually perpendicular or substantially perpendicular directions by the X-direction positioning members 12 and the Z-direction positioning members 13 without providing any positioning member on the other side (X1 direction side) in the X direction or on the other side (Z1 direction side) in the Z direction of the liquid crystal panel 21. This makes it possible to perform the positioning of the liquid crystal panel 21 with respect to the two mutually perpendicular or substantially perpendicular directions while simplifying the positioning members.

Moreover, in the first preferred embodiment, as was described above, the X-direction positioning members 12 and the Z-direction positioning members 13 are configured so as to position the liquid crystal panel 21 in a state of leaning against the one side with respect to the X direction and the Z direction by causing the X-direction positioning members 12 to contact the vicinity of the two end portions of the side surface 211 of the liquid crystal panel 21 in the X2 direction and causing the Z-direction positioning members 13 to contact the vicinity of the two end portions of the side surface 212 of the liquid crystal panel 21 in the Z2 direction. This allows the X-direction positioning members 12 and the Z-direction positioning members 13 to be used to position the vicinity of the two end portions of each one of the side surfaces 211 and 212 of the liquid crystal panel 21 in the X direction and in the Z direction, respectively, so the liquid crystal panel 21 can be positioned even more precisely with respect to the two mutually perpendicular or substantially perpendicular directions.

In addition, in the first preferred embodiment, as was described above, the X-direction positioning members 12 (Z-direction positioning members 13) are preferably integral with the front case 1. Consequently, unlike a case of forming the X-direction positioning members 12 (Z-direction positioning members 13) separately from the front case 1, it is possible to prevent an increase in the number of parts.

### Second Preferred Embodiment

Next, a second preferred embodiment will be described with reference to FIGs. 12 through 14. In this second preferred embodiment, unlike the aforementioned first preferred embodiment, a description will be given regarding a configuration in which Z-direction positioning members 42c that position the liquid crystal panel 21 with respect to the Z direction are provided on a bezel 4c disposed along the side of the liquid crystal panel 21 oriented toward the bottom. Note that the Z-direction positioning members 42c are one example of a "second positioning member" of a preferred embodiment of the present invention.

In the second preferred embodiment, as is shown in FIG. 12, while the two X-direction positioning members 12 that position the liquid crystal panel 21 are provided on the side of the opening 1a of the front case 1 oriented in the X2 direction as in the aforementioned first preferred embodiment, no positioning member that positions the liquid crystal panel 21 is provided on the side of the opening 1a oriented toward the bottom (oriented in the Z2 direction). Furthermore, in the second preferred embodiment, as in the aforementioned first preferred embodiment, a configuration is such that the liquid crystal panel 21 is positioned by the two X-direction positioning members 12 in the X direction in a state of leaning against the one side toward the X2 direction. Note that no positioning member that positions the liquid crystal panel 21 is provided on the side of the opening 1a of the front case 1 oriented in the X1 direction as in the aforementioned first preferred embodiment. Moreover, the X-direction positioning members 12 are one example of a "positioning member" of a preferred embodiment of the present invention.

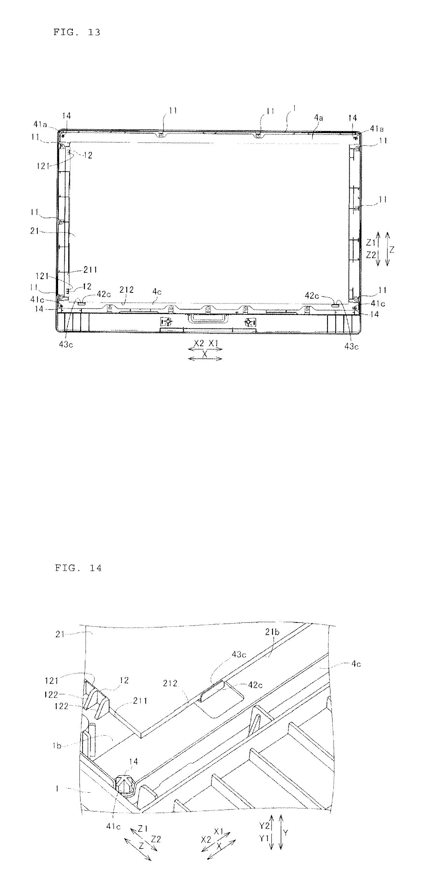

In addition, in the second preferred embodiment, as is shown in FIGs. 12 and 13, the bezel 4a is provided along the side of the liquid crystal panel 21 oriented toward the top, and the bezel 4c is provided along the side of the liquid crystal panel 21 oriented toward the bottom. Furthermore, the cushion members 5 are respectively provided along the side oriented in the X1 direction and the side oriented in the X2 direction of the liquid crystal panel 21 as shown in FIG. 12. Moreover, holes 41c into which bosses 14 of the front case 1 are inserted are formed in the vicinity of the two end portions of the bezel 4c in the same manner as in the bezel 4a. Consequently, the two bezels 4a and 4c can be positioned with respect to the front case 1 by inserting the bosses 14 of the front case 1 into the holes 41a and 41c in the bezels 4a and 4c. In addition, in the second preferred embodiment, both the resin frame 23 and the two bezels 4a and 4c are positioned with respect to the front case 1 by the bosses 14 as in the aforementioned first preferred embodiment.

Furthermore, the bezel 4c disposed toward the bottom of the liquid crystal panel 21 includes the two positioning members 42c that contact the vicinity of the two end portions of the side surface 212 of the liquid crystal panel 21 oriented toward the bottom (oriented in the Z2 direction) as shown in FIGs. 12 through 14. The two positioning members 42c are preferably integral with the bezel 4c by cutting the bezel 4c and raising the cut portions. Moreover, each of the two positioning members 42c includes a contact surface 43c that contacts the side surface 212 of the liquid crystal panel 21 oriented toward the bottom, and the contact surfaces 43c are arranged so as to extend in the X direction along the side surface 212 of the liquid crystal panel 21 as shown in FIGs. 13 and 14. In addition, the two positioning members 42c are configured so as to position the liquid crystal panel 21 in the Z direction in a state in which the liquid crystal panel 21 leans against the one side toward the Z2 direction as a result of the contact surfaces 43c contacting the side surface 212 of the liquid crystal panel 21 oriented toward the bottom (oriented in the Z2 direction). That is, in the second preferred embodiment, it is possible to position the liquid crystal panel 21 in a state of leaning against the one side with respect to the X direction and the Z direction via the two X-direction positioning members 12 of the front case 1 and the two positioning members 42c of the bezel 4c. Note that no positioning member that positions the liquid crystal panel 21 is provided on the bezel 4a disposed on the side of the opening 1a of the front case 1 oriented toward the top (oriented in the Z1 direction).

Note that the remaining configuration of the second preferred embodiment is preferably the same or substantially the same as that of the aforementioned first preferred embodiment.

In the second preferred embodiment, as was described above, the X-direction positioning members 12 of the front case 1 and the A-direction positioning members 42c of the bezel 4c are respectively caused to contact the side surface 211 in the X2 direction and the side surface 212 in the Z2 direction of the liquid crystal panel 21, and the liquid crystal panel 21 is positioned in a state of leaning against the one side with respect to the X direction and the Z direction by the X-direction positioning members 12 of the front case 1 and the Z-direction positioning members 42c of the bezel 4c. If such a configuration is adopted, it is possible to position the liquid crystal panel 21 easily in a state of leaning against the one side with respect to the two mutually perpendicular or substantially perpendicular directions by using the X-direction positioning members 12 of the front case 1 and the Z-direction positioning members 42c of the bezel 4c without providing any positioning member on the other side (X1 direction side) in the X direction or on the other side (Z1 direction side) in the Z direction of the liquid crystal panel 21.

Furthermore, in the second preferred embodiment, as was described above, the bosses 14 that position both the resin frame 23 and the bezel 4c with respect to the front case 1 are provided on the front case 1. With such a configuration, because the bosses 14 are shared for the positioning of both the resin frame 23 and the bezel 4c, there is no need to provide respective positioning members for the resin frame 23 and the bezel 4c separately from each other. This makes it possible to simplify the structure that positions the resin frame 23 and the bezel 4c.

Note that in the second preferred embodiment as well, as in the case with the aforementioned first preferred embodiment, as a result of the front case 1 being provided with the X-direction positioning members 12 that position the liquid crystal panel 21 by contacting the liquid crystal panel 21, assembly is possible by sequentially stacking up the liquid crystal panel 21 from the front side with the front case 1 as the base while precisely positioning the liquid crystal panel 21 with respect to the front case 1.

Note that the other effects of the second preferred embodiment are the same as in the aforementioned first preferred embodiment.

Note that the preferred embodiments disclosed herein merely constitute non-limiting examples in all respects and should be considered to be non-restrictive. The scope of the present invention is indicated not by the description of the aforementioned preferred embodiments but rather by the scope of the patent claims and includes all modifications with an equivalent meaning to the scope of the patent claims and within the scope of the patent claims.

For instance, in the aforementioned first and second preferred embodiments, an example was shown in which the "display device" of the present invention is applied to a liquid crystal television, but the present invention is not limited to this. The present invention can also be applied to a display device other than a liquid crystal television, for example, to a monitor for a personal computer.

Moreover, in the aforementioned first and second preferred embodiments, an example was shown in which bezels are preferably provided on two sides out of the edge portion of the substantially rectangular liquid crystal panel, but the present invention is not limited to this. With the present invention, a configuration is also possible in which no bezel is provided on any of the four sides of the edge portion of the substantially rectangular liquid crystal panel. In addition, it would also be possible to provide a bezel on only one of the four sides of the edge portion of the liquid crystal panel or to provide bezels on three sides or the four sides.

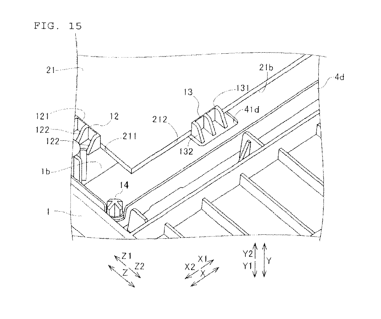

Furthermore, in the aforementioned first preferred embodiment, an example was shown in which the X-direction positioning members and Z-direction positioning members (first positioning member) of the front case are preferably provided on the sides on which no bezel is provided out of the four sides of the liquid crystal panel (display panel), but the present invention is not limited to this. With the present invention, as is shown in FIG. 15, it would also be possible to provide a bezel 4d on the side on which the positioning members (first positioning member) of the front case are provided. In this case, it is preferable to provide the bezel 4d with escape portions 41d including cutouts or holes for the positioning members.

Moreover, in the aforementioned first and second preferred embodiments, an example was shown in which the display panel of a preferred embodiment of the present invention is applied to a liquid crystal panel, but the present invention is not limited to this. The display panel of the present invention can also be applied widely to a display panel other than a liquid crystal panel.

In addition, in the aforementioned first and second preferred embodiments, an example was shown in which the liquid crystal panel as the display panel of the present invention is positioned by the positioning members that are preferably disposed only on one side (oriented in the X2 direction and oriented in the Z2 direction) in each of the two mutually perpendicular or substantially perpendicular directions (X direction and Z direction), but the present invention is not limited to this. With the present invention, it would also be possible to provide positioning members on both sides (oriented in the X1 (Z1) direction and the X2 (Z2) direction) in each of the two mutually perpendicular or substantially perpendicular directions (X direction and Z direction) and to position the rectangular display panel on the four sides.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A display device comprising:
a display panel; and
a front case including an opening that exposes a display region of the display panel and a first positioning member that positions the display panel by contacting at least one side of the display panel.

2. The display device according to claim 1, wherein the first positioning member includes a contact surface extending along at least one side of the display panel and is configured so as to position the display panel as a result of the contact surface contacting the side surface of the display panel.

3. The display device according to claim 2, wherein the contact surface of the first positioning member protrudes rearward from an inner surface of the front case and such that a width in a direction of extension thereof along the side of the display panel is larger than a height of rearward protrusion.

4. The display device according to claim 1, wherein the first positioning member is provided only on one side of the display panel in a first direction and configured so as to contact the one side surface of the display panel in the first direction and position the display panel in a state of leaning against the one side.

5. The display device according to claim 4, wherein the first positioning member is provided only on one side of the display panel in the first direction, another first positioning member is also provided only on one side of the display panel in a second direction perpendicular or substantially perpendicular to the first direction, and the first positioning members are configured so as to respectively contact the one side surface in the first direction and the one side surface in the second direction of the display panel and thus position the display panel in a state of leaning against the one side with respect to the first direction and the second direction.

6. The display device according to claim 5, wherein the first positioning members are configured so as to respectively contact an area of two end portions of the one side surface of the display panel in the first direction and the area of the two end portions of the one side surface of the display panel in the second direction and thus position the display panel in a state of leaning against the one side with respect to the first direction and the second direction.

7. The display device according to claim 1, wherein the first positioning member is integral with the front case.

8. The display device according to claim 1, further comprising a bezel that presses an edge portion of the display panel and with which a second positioning member that positions the display panel is integral;
the first positioning member of the front case is provided only on one side of the display panel in a first direction;
the second positioning member of the bezel is provided only on one side of the display panel in a second direction perpendicular or substantially perpendicular to the first direction; and
the display panel is configured so as to be positioned in a state of leaning against the one side with respect to the first direction and the second direction as a result of the one side surface in the first direction and the one side surface in the second direction being respectively contacted by the first positioning member and the second positioning member.

9. The display device according to claim 8, further comprising a frame-shaped panel support that supports the display panel from the rear, and the front case is provided with a third positioning member that positions both the panel support and the bezel with respect to the front case.

10. A television comprising:
a receiver that receives a television broadcast;
a display panel that displays the television broadcast received by the receiver; and
a front case including an opening that exposes a display region of the display panel and a positioning member that positions the display panel by contacting at least one side of the display panel.
